# EUROPÄISCHE PATENTSCHRIFT

(11) **EP 0 994 356 B1**
(45) Veröffentlichungstag und Bekanntmachung des Hinweises auf die Patenterteilung: **21.12.2005**
(21) Anmeldenummer: 99118340.1
(22) Anmeldetag: 16.09.1999
(51) Int. Cl.: G01N 35/10

(54) **Auswechselbare Schwingpipettiernadel**
Replaceable swinging pipetting needle
Aiguille de pipettage pivotante interchangeable

(30) Priorität: 16.10.1998 DE 19847759
(43) Veröffentlichungstag der Anmeldung: 19.04.2000
(73) Patentinhaber: Dade Behring Marburg GmbH, 35001 Marburg (DE)
(72) Erfinder: Wilmes, Hugo, 65812 Bad Soden (DE); Kube, Oliver, 60316 Frankfurt (DE)

(56) Entgegenhaltungen:
- EP-A- 0 458 138
- WO-A-00/02030
- US-A- 5 287 758
- US-A- 5 365 798
- US-A- 5 744 729

## Beschreibung

Gegenstand der Erfindung ist eine auswechselbare Schwingpipettiernadeleinheit für einen automatisch arbeitenden Analysator zur Untersuchung von biologischen Körperflüssigkeiten.

Es ist bekannt, daß in automatisch arbeitenden Analysatoren, die zur Untersuchung von biologischen Körperflüssigkeiten eingesetzt werden, die benötigten Reagenzien mittels einer Schwingpipettiernadel in eine Meßküvette eingefüllt werden. Die Pipettiernadel hat dabei außerdem die Aufgabe, eine Durchmischung der zu untersuchenden Körperflüssigkeit mit den Reagenzien sicherzustellen. Hierzu ist es erforderlich, die Pipettiernadel in Schwingungen zu versetzen. Beim Einfüllen der Reagenzien und bei den sich anschließenden Schwingungen besteht die Gefahr, daß die empfindliche Pipettiernadel mit der Messküvette oder anderen Geräteteilen kollidiert, dabei beschädigt wird und wegen Unbrauchbarkeit ausgewechselt werden muß. Bisher ist das Auswechseln der Pipettiernadel mit erheblichem technischen Aufwand verbunden, der nur von einem dafür ausgebildeten Servicetechniker geleistet werden kann. Dabei müssen nicht nur die Pipettiernadel und andere mechanische Teile sondern auch der Motor und die Heizung der Pipettiernadel ausgewechselt werden. Der damit verbundene Zeitverlust und Kostenaufwand erweckte das Bedürnis, eine neue Konstruktion für eine Schwingpipettiernadel zu entwickeln, die es dem am Analysator arbeitenden Bedienungspersonal ermöglicht, ohne Hinzuziehung eines speziell ausgebildeten Technikers eine beschädigte Pipettiernadel auf schnelle und einfache Weise auszuwechseln.

Es wurde nun gefunden, daß diese Aufgabe durch eine Schwingpipettiernadeleinheit für einen automatisch arbeitenden Analysator zur Untersuchung von biologischen Körperflüssigkeiten gelöst wird, bei dem zum Ein- und Ausbau der Schwingpipettiernadeleinheit in den Analysator ein mit einer Zugfeder 3 ausgerüsteter Halter 1 vorgesehen ist, mit dem die auf einer Schneidenlagerung ruhende, die Pipettiernadel 4 tragende Schwinge in einer festen Position fixiert und lösbar verbunden ist.

Die Konstruktion der erfindungsgemäßen auswechselbaren Schwingpipettiernadeleinheit wird durch die beiliegenden Figuren 1 bis 4 verdeutlicht.
Fig. 1 zeigt das Ineinandergreifen von Halter 1 und Schwinge 2 in einer Ansicht von der rechten Seite.
Fig. 2 zeigt das Ineinandergreifen von Halter 1 und Schwinge 2 in einer Ansicht von der linken Seite.
Fig. 3 zeigt den Halter 1 mit der Schwinge 2 von vorn.
Fig. 4 zeigt eine Vorderansicht der erfindungsgemäßen auswechselbaren Schwingpipettiernadeleinheit mit eingerastetem Excentermotor.
Fig. 5 zeigt eine Seitenansicht der auswechselbaren Schwingpipettiernadeleinheit von der Seite.

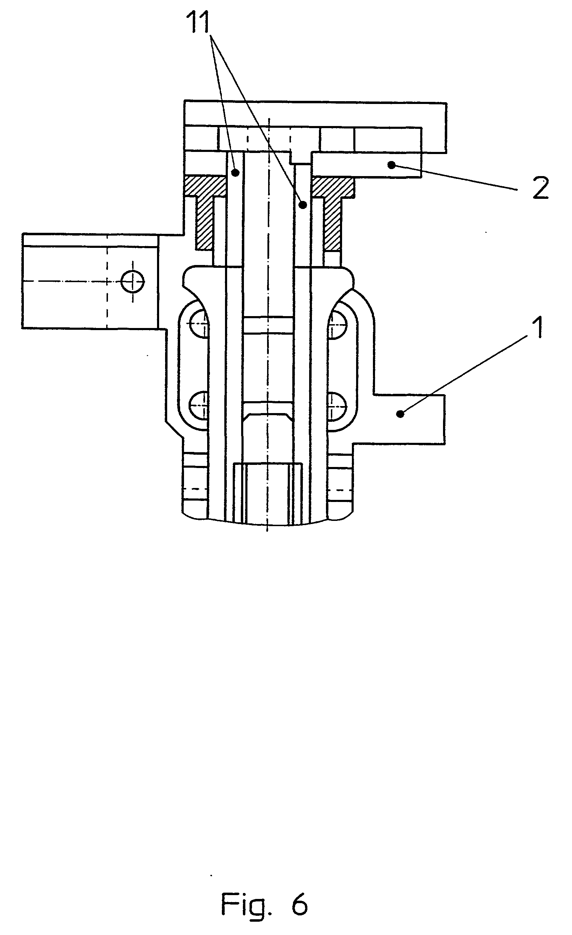

Fig. 6 zeigt eine Vorderansicht der Aufhängung der Schwingpipettiernadel, wobei die Prismenlagerung der Schwinge 2 aufgeschnitten ist.

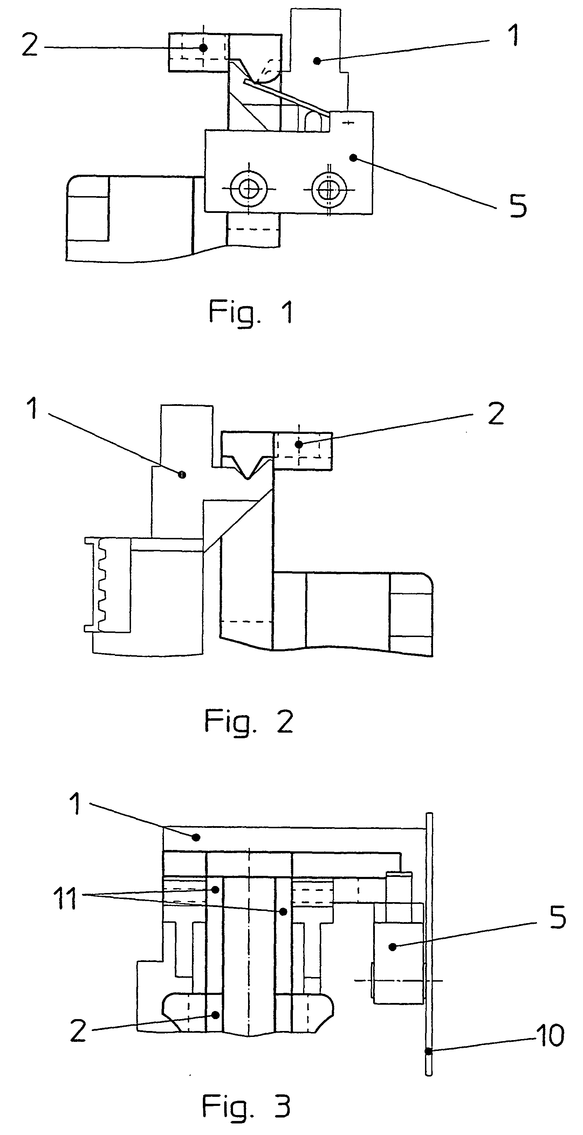

Im einzelnen läßt Fig. 1 erkennen, daß die dem Halter 1 anliegende Schwinge 2 in Kontakt mit einem Sensor 5 steht. Stößt die an der Schwinge 2 befestigte Pipettiernadel auf einen festen Gegenstand, dann hebt sich die Schwinge 2 und der Fluß des elektrischen Stromes wird durch den auf der Platine 10 befestigten Sensor 5 unterbrochen.

Fig. 2 zeigt die Schneide der Schwinge 2 in einer Prismenlagerung des Halters 1.

Aus Fig. 3 ist zu erkennen, daß die Schwinge 2 der Halterung 1 vorgelagert ist und auf einer Platine 10 ein Sensor 5 angeordnet ist, der den Analysator ausschaltet, wenn die Pipettiernadel auf einen festen Widerstand stößt.

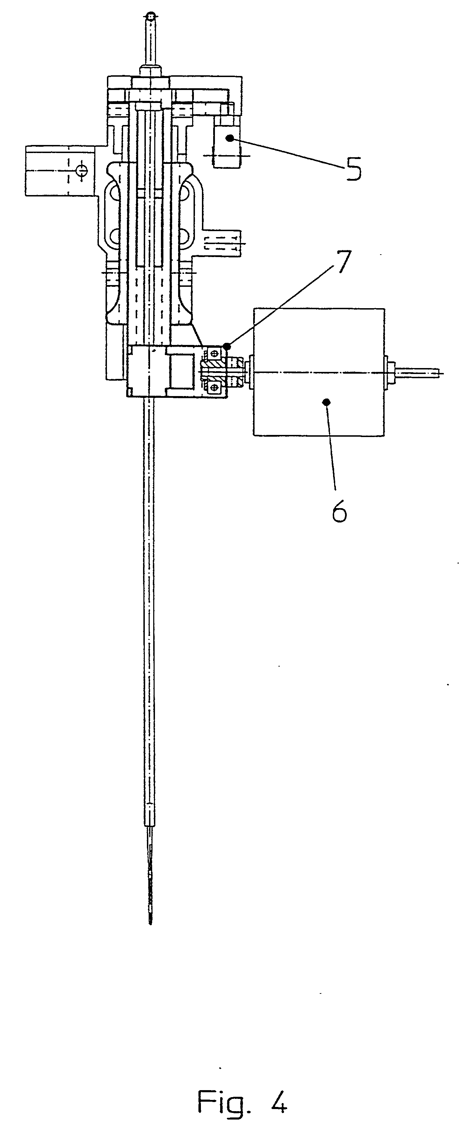

Fig. 4 zeigt eine Vorderansicht der auswechselbaren Schwingpipettiernadeleinheit, in der der Antriebsmotor mit der exzentrisch rotierenden Welle 6 und eine Antriebsgabel 7 zu erkennen sind, in die der Exzenter zur Erzeugung von Schwingungen eingreift.

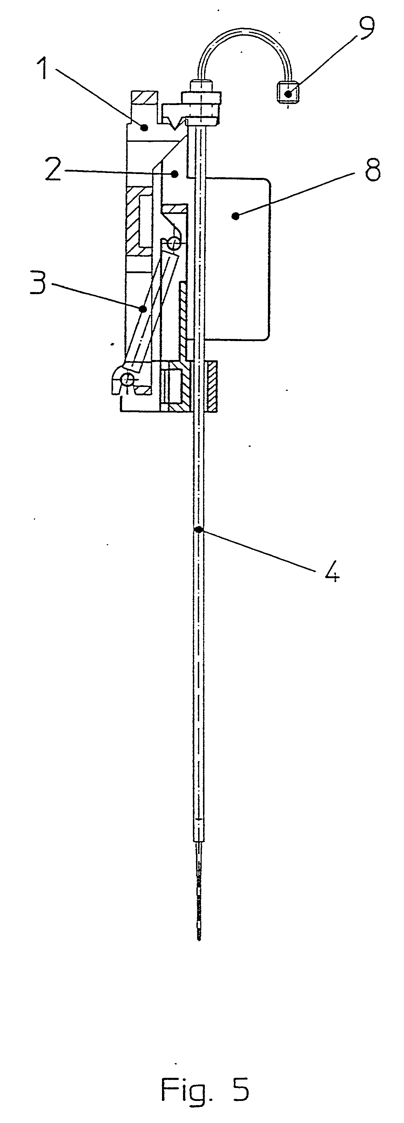

Fig.5 zeigt eine Seitenansicht der auswechselbaren Schwingpipettiernadeleinheit mit dem Halter 1, der Schwinge 2, der Zugfeder 3, der Pipettiernadel 4, den Griffen 8 zum Auswechseln der Pipettiernadel sowie dem Verbindungsstück 9, das für die Zuführung von Reagenzien vorgesehen ist.

Diese Darstellungen lassen erkennen, daß die auswechselbare Schwingpipettiernadeleinheit aus zwei Teilegruppen besteht, der Schwinge 2 mit der Pipettiernadel 4 und einem starr befestigten Halter 1. An dem Halter 1 ist eine Zugfeder 3 unlösbar verbunden, die in eine Einhängeöffnung der Rippen 11 der Schwinge 2 einrasten und diese dadurch an den Halter 1 andrücken kann. Dadurch wirkt auf die Schwinge 2 eine Rückholkraft, die sicherstellt, daß sie beim Schwingen ihre festgelegte Position nicht verläßt.

Zur Vermeidung von Beschädigungen der Pipettiernadel ist es von größter Bedeutung, daß sie während der gesamten Untersuchung ihre vorbestimmten Positionen beibehält und Kollisionen mit festen Teilen des Analysators oder der Messküvette vermieden werden. Das wird erfindungsgemäß durch eine sicher und wiederholgenaue Lagerung der Schwinge mittels Prisma und Schneide gewährleistet, wobei die Schneidenlagerung an Rippen 11 befestigt ist, die eine seitliche Fixierung der Schwinge 2 gewährleisten.

Obwohl es das Hauptziel der vorliegenden Erfindung ist, eine beschädigte Schwingpipettiernadel in einfacher Weise auswechseln zu können, soll die Notwendigkeit eines Auswechselns natürlich dadurch verringert werden, daß Beschädigungen der Pipettiernadel 4 weitestgehend ausgeschlossen werden. Hierfür dient die durch die Zugfeder 3 bewirkte flexible Lagerung der Schwinge 2, die eine vertikale Bewegung der Schwinge 2 ermöglicht. Stößt die Pipettiernadel 4 auf einen festen Gegenstand, dann gleitet sie aus der Prismenlagerung des Halters 1 heraus, verschiebt sich nach oben und unterbricht dabei durch Auslösen des Sensors 5 den Stromfluß. Damit ist der Analysator sofort ausgeschaltet und Zerstörungen der Pipettiernadel werden vermieden. Ist ein Auswechseln der Pipettiernadel jedoch erforderlich, dann kann die Schwinge 2 nach oben aus der Schneidenlagerung herausgeschoben, von der Zugfeder 3 gelöst und mit einem einfachen Handgriff abgenommen werden. Dazu reicht es aus, mit zwei Fingern den Griff 8 zu umfassen und ihn nach oben schieben.

Für den Einsatz der erfindungsgemäßen Schwingpipettiernadel ist es vorteilhaft, wenn sie beheizbar ist. Die zum Durchmischen der Reagenzien mit der zu untersuchenden Körperflüssigkeit erforderlichen Schwingungen werden durch den mit einer exzentrisch rotierenden Welle 6 ausgestatteten Exzentermotor oder auch durch eine exzentrisch gelagerte Walze erzeugt.

Während die bisher verwendeten Schwingpipettiernadeln starr und fest in den Analysator eingebaut sind, trifft dies erfindungsgemäß nur für die Halterung der Schwinge zu. Dadurch ist es erfindungsgemäß nicht mehr notwendig, das gesamte Pipettiersystem abzuschrauben und komplett auszuwechseln. Es reicht jetzt aus, nur die die Pipettiernadel tragende Schwinge auszutauschen. Das ist ein so einfacher Vorgang, daß diese Reparatur durch das am Analysator arbeitende Bedienungspersonal mit einem einzigen Handgriff erfolgen kann, mit dem die beschädigte Schwingpipettiernadeleinheit gegen ein entsprechendes Ersatzteil ausgewechselt wird. Damit wird erfindungsgemäß eine Lösung angeboten, die eine schnelle und kostengünstige Reparatur einer beschädigten Schwingpipettiernadel ermöglicht.

### Bezugszeichenliste:

- 1: Halter
- 2: Schwinge
- 3: Zugfeder
- 4: heizbare Pipettiernadel
- 5: Sensor
- 6: Antriebsmotor mit Exzenter
- 7: Antriebsgabel für Exzenter
- 8: Griff zum Wechseln
- 9: Zuführung für Reagenzien
- 10: Platine
- 11: Rippen

## Patentansprüche

1. Schwingpipettiernadeleinheit für einen automatisch arbeitenden Analysator zur Untersuchung von biologischen Körperflüssigkeiten, **dadurch gekennzeichnet, daß** zum Ein- und Ausbau der Schwingpipettiernadeleinheit in den Analysator ein mit einer Zugfeder (3) ausgerüsteter Halter (1) vorgesehen ist, mit dem die auf einer Schneidenlagerung ruhende, die Pipettiernadel (4) tragende Schwinge (2) in einer festen Position fixiert und lösbar verbunden ist.

2. Schwingpipettiernadeleinheit nach Anspruch 1, **dadurch gekennzeichnet, daß** die Schneidenlagerung an Rippen (11) befestigt ist, die eine seitliche Fixierung der Schwinge (2) gewährleisten.

3. Schwingpipettiernadeleinheit nach den Ansprüchen 1 und 2, **dadurch gekennzeichnet, daß** die Zugfeder (3) in eine Einhängeöffnung der Rippen (11) der Schwinge (2) einrasten und diese an den Halter (1) andrücken kann.

4. Schwingpipettiernadeleinheit nach den Ansprüchen 1 bis 3, **dadurch gekennzeichnet, daß** die Pipettiernadel (4) heizbar ist.

5. Schwingpipettiernadeleinheit nach den Ansprüchen 1 bis 4, **dadurch gekennzeichnet, daß** die Schwinge (2) eine Antriebsgabel (7) aufweist, in die zur Erzeugung von Schwingungen eine exzentrisch rotierende Welle (6) eingreift.

6. Schwingpipettiernadeleinheit nach den Ansprüchen 1 bis 5, **dadurch gekennzeichnet, daß** an der Schwinge (2) ein Verbindungsstück (9) für die Zuführung von Reagenzien vorgesehen ist.

7. Schwingpipettiernadeleinheit nach den Ansprüchen 1 bis 6, **dadurch gekennzeichnet, daß** die Schwinge (2) beim Aufsetzen in vertikaler Richtung verschiebbar ist und dabei ein auf einer Platine (10) angebrachter Sensor (5) den Analysator ausschaltet.

8. Schwingpipettiernadeleinheit nach den Ansprüchen 1 bis 7**, dadurch gekennzeichnet, daß** die Schwinge (2) Griffe (8) zum Auswechseln der Pipettiernadel aufweist.

## Claims

1. An oscillating pipette needle unit for an automatic analyzer for examining biological body fluids, **characterized in that**, for the purpose of introducing the oscillating pipette needle unit into the analyzer and withdrawing it from the latter, a holder (1) is provided which is equipped with a tension spring (3) and with which the oscillating arm (2), carrying the pipette needle (4) and resting on a knife-edge bearing, is fixed in a stationary position and is releasably connected.

2. Oscillating pipette needle unit according to Claim 1, **characterized in that** the knife-edge bearing is secured on ribs (11) which ensure a lateral fixing of the oscillating arm (2).

3. Oscillating pipette needle unit according to Claims 1 and 2, **characterized in that** the tension spring (3) can engage in an insert opening of the ribs (11) of the oscillating arm (2) and can press the latter against the holder (1).

4. Oscillating pipette needle unit according to Claims 1 to 3, **characterized in that** the pipette needle (4) can be heated.

5. Oscillating pipette needle unit according to Claims 1 to 4, **characterized in that** the oscillating arm (2) has a drive fork (7) in which an eccentric rotating shaft (6) engages for the purpose of generating oscillations.

6. Oscillating pipette needle unit according to Claims 1 to 5, **characterized in that** a connection piece (9) for admission of reagents is provided on the oscillating arm (2).

7. Oscillating pipette needle unit according to Claims 1 to 6, **characterized in that** the oscillating arm (2) can be moved in the vertical direction upon assembly, and a sensor (5) arranged on a plate (10) then switches the analyser off.

8. Oscillating pipette needle unit according to Claims 1 to 7, **characterized in that** the oscillating arm (2) has grips (8) for exchanging the pipette needle.

## Revendications

1. Unité d'aiguille de pipetage oscillante pour un analyseur à fonctionnement automatique pour examiner des liquides corporels biologiques, **caractérisée en ce que**, pour le montage et le démontage de l'unité d'aiguille de pipetage oscillante, il est prévu dans l'analyseur un support (1) équipé d'un ressort de traction (3) auquel est raccordé l'élément oscillant (2) portant l'aiguille de pipetage (4), reposant sur un couteau, ledit élément étant immobilisé dans une position fixe et amovible.

2. Unité d'aiguille de pipetage oscillante selon la revendication 1, **caractérisée en ce que** le couteau est fixé sur des nervures (11) qui garantissent une fixation latérale de l'élément oscillant (2).

3. Unité d'aiguille de pipetage oscillante selon les revendications 1 et 2, **caractérisée en ce que** le ressort de traction (3) peut s'engager dans une ouverture d'accrochage des nervures (11) de l'élément oscillant (2) et presser celle-ci sur le support (1).

4. Unité d'aiguille de pipetage oscillante selon les revendications 1 à 3, **caractérisée en ce que** l'aiguille de pipetage (4) peut être chauffée.

5. Unité d'aiguille de pipetage oscillante selon les revendications 1 à 4, **caractérisée en ce que** l'élément oscillant (2) présente un étrier d'entrainement (7), dans lequel s'engage un arbre à rotation excentrique (6) pour produire des oscillations.

6. Unité d'aiguille de pipetage oscillante selon les revendications 1 à 5, **caractérisée en ce qu'**il est prévu sur l'élément oscillant (2) une pièce de raccordement (9) pour l'acheminement de réactifs.

7. Unité d'aiguille de pipetage oscillante selon les revendications 1 à 6, **caractérisée en ce que** l'élément oscillant est déplaçable en direction verticale lors de l'application et **en ce qu'**un capteur (5) agencé sur une platine (10) déconnecte l'analyseur.

8. Unité d'aiguille de pipetage oscillante selon les revendications 1 à 7, **caractérisée en ce que** l'élément oscillant (2) présente des prises (8) pour changer l'aiguille de pipetage.
